# EUROPÄISCHE PATENTSCHRIFT

(11) **EP 1 514 154 B1**
(45) Veröffentlichungstag und Bekanntmachung des Hinweises auf die Patenterteilung: **29.08.2007**
(21) Anmeldenummer: 03760585.4
(22) Anmeldetag: 30.04.2003
(51) Int. Cl.: G02B 27/01, H04N 13/00, H04N 9/31, G02F 1/35

(54) **BILDGEBUNGSVERFAHREN MIT FLUORESZENZ-PROJEKTIONSSCHIRM UND UV-STRAHLUNGSQUELLE**
IMAGE GENERATION METHOD WITH A FLUORESCENCE PROJECTION SCREEN AND A UV RADIATION SOURCE
METHODE DE FORMATION D'IMAGES AVEC UN ECRAN DE PROJECTION FLUORESCENT ET UNE SOURCE DE RAYONNEMENT UV

(30) Priorität: 20.06.2002 DE 10227468
(43) Veröffentlichungstag der Anmeldung: 16.03.2005
(73) Patentinhaber: Bayerische Motoren Werke Aktiengesellschaft, 80809 München (DE)
(72) Erfinder: BRÜGL, Jürgen, 81669 München (DE); HEIMRATH, Michael, 82256 Fürstenfeldbruck (DE); HAUSER, Sonja, 86316 Friedberg (DE)
(86) Internationale Anmeldenummer: PCT/EP2003/004485
(87) Internationale Veröffentlichungsnummer: WO 2004/001483

(56) Entgegenhaltungen:
- EP-A- 0 455 449
- US-A- 5 764 403
- US-A1- 2002 063 946
- PATENT ABSTRACTS OF JAPAN vol. 1999, no. 05, 31. Mai 1999 (1999-05-31) & JP 11 041548 A (FUJI PHOTO FILM CO LTD), 12. Februar 1999 (1999-02-12) in der Anmeldung erwähnt

## Beschreibung

Die Erfindung betrifft ein Projektionssystem, umfassend eine Strahlungsquelle zur Erzeugung elektromagnetischer Strahlung außerhalb des sichtbaren Wellenlängenbereichs, eine von der Strahlungsquelle bestrahlbare Bildgebungseinheit und einen Projektionsschirm, mit einer strahlungssensitiven Fläche, die bei Anregung mit besagter unsichtbarer Strahlung, Fluoreszenzlicht im sichtbaren Wellenlängenbereich aussenden kann.

Die Erfindung betrifft weiter ein Verfahren zur bildgebenden Darstellung von Information auf einem von einer Strahlungsquelle über eine Bildgebungseinheit mit elektromagnetischer Strahlung außerhalb des sichtbaren Wellenlängenbereichs bestrahlten Projektionsschirm mit einer strahlungssensitiven Fläche, die bei Anregung mit besagter unsichtbarer Strahlung, Fluoreszenzlicht im sichtbaren Wellenlängenbereich aussenden kann.

Aus der JP 110 41 548 A sind ein Projektionssystem und ein Verfahren der vorgenannten Art bekannt, wobei von einer Strahlungsquelle ultraviolette (UV-)Strahlung ausgesendet wird. Mit einem zweidimensionalen Spiegelfeld mit einer Mehrzahl, in Ihrer Winkelausrichtung ansteuerbarer Mikrospiegel auf einem Silizium-Substrat, die von der UV-Quelle bestrahlt werden, wird der UV-Strahlung ein zweidimensionales Bildsignal aufmoduliert, das auf einen Fluoreszenz-Projektionsschirm reflektiert wird, wobei jeder Mikrospiegel einem Bildpunkt (Pixel) entspricht. In einer strahlungssensitiven Schicht des Fluoreszenz-Projektionsschirms sind im Bereich jeden Pixels drei räumlich voneinander verschiedene Subpixel angeordnet, die jeweils aus unterschiedlichen Materialien aufgebaut sind. Diese unterschiedlichen Materialien werden durch Bestrahlung mit UV-Strahlung desselben Wellenlängenbereichs zur Emission von sichtbarem Fluoreszenzlicht in materialspezifisch unterschiedlichen Wellenlängenbereichen angeregt.

Nachteilig bei diesem bekannten Projektionssystem und Verfahren ist zum einem die aufwendige Herstellung des Projektionsschirms, bei dem unterschiedliche Materialien mit großer räumlicher Genauigkeit angeordnet werden müssen. Dies führt zu hohen Ausschussraten und damit zu hohen Herstellungskosten, insbesondere bei größerflächigen Anzeigen. Außerdem wird die maximal erreichbare Auflösung stark reduziert. Zum anderen sind ein solches System und Verfahren höchst sensibel in Bezug auf die relative Ausrichtung der einzelnen Komponenten zueinander. Bereits kleine Auslenkungen aus der Ideallage haben eine generelle Farbverschiebung der Anzeige zur Folge, da statt des korrekten Subpixels ein benachbarter Subpixel bestrahlt wird, der jedoch Licht einer anderen Farbe emittiert. Die bekannten Vorrichtungen bzw. das bekannte Verfahren eignen sich daher nur für kleine Anzeigen mit starr miteinander verbundenen und möglichst vibrationsarm angeordneten Komponenten.

Aus der US 5,684,621 A ist weiter ein Projektionssystem zur Darstellung dreidimensionaler Bilder bekannt. Dabei dient ein Quader aus einem Seltenerden-dotierten, kristallinen oder gläsernen, im sichtbaren und infraroten (IR-) Wellenlängenbereich transparenten Grundmaterial als Projektionsvolumen. Das Projektionsvolumen wird von zwei IR-Strahlung aussendenden Lasern gescannt, die so gesteuert werden, dass sich ihre Strahlen in bestimmten Punkten schneiden. In diesen Punkten ist die Energiedichte der Strahlung so hoch, dass es in erheblichem Maß zu einer sog. Zwei-Photonen-Anregung, d.h. zur simultanen Absorption zweier IR-Photonen durch ein Seltenerden-lon kommt. Das Ion relaxiert in seinen Grundzustand unter Aussendung eines Fluoreszenzphotons im sichtbaren Wellenlängenbereich, wodurch der jeweilige Schnittpunkt der Laserstrahlen als Leuchtpunkt erscheint. Eine Steuerung der Farbe des Leuchtpunktes ist durch Änderung der Wellenlänge wenigstens eines der beiden Laser möglich. Die fest in die Kristall- oder Glasstruktur des Grundmaterials eingefügten Seltenerden-Ionen weisen nämlich unterschiedliche, relativ scharfe Energieniveaus auf, die durch unterschiedliche Anregungsenergien anregbar sind und unter Aussendung energetisch unterschiedlicher, d.h. unterschiedlich farbiger Photonen in den Grundzustand relaxieren.

Nachteilig bei diesem bekannten Projektionssystem ist jedoch der große Platzbedarf des Projektionsvolumens, sowie die komplizierte Ansteuerung der Laser, die höchst sensibel in Bezug auf die relative Ausrichtung ihrer Komponenten ist.

Dieselben Nachteile gelten auch für die aus der US 5,684,621 hervorgegangene US 5,764,403 A, die im Wesentliche funktionell gleich ausgebildet ist. Das Projektionsvolumen bzw. der Bildschirm ist hier zwar flacher, aber ebenfalls 3-dimensional als strahlungssensitiver Quader ausgebildet, in den in einer Ebene eingestrahlt und der senkrecht dazu betrachtet wird. Die Höhe des Quaders spielt daher ein wesentliche Rolle und kann nicht beliebig reduziert werden. Weitere bildgebende Verfahren sind aus US 2002 063946 und EP 0 455 449 bekannt.

Aufgabe der vorliegenden Erfindung ist es daher, ein Verfahren zur Bildgebung in Kraftfahrzeugen zu schaffen, das günstig in der Herstellung und robust in der Anwendung und daher insbesondere zum Einsatz in einem Kraftfahrzeug geeignet ist.

Diese Aufgabe wird erfindungsgemäß durch die Merkmale des Anspruchs 1 gelöst. Die strahlungssensitive Fläche des Projektionsschirms besteht aus einem Material, das ortsunabhängig Fluoreszenzlicht unterschiedlicher Wellenlängen in Abhängigkeit von der Wellenlänge der Anregungsstrahlung abgibt und dass die Strahlungsquelle Anregungsstrahlung unterschiedlicher Wellenlängen aussenden kann.

Durch die Ausgestaltung des Projektionsschirms, z.B. durch Verwendung eines der in der US 5,684,621 offenbarten Materialien als strahlungssensitive Fläche, kann das Problem der Ansteuerung unterschiedlicher Farben bei der Anzeige von der räumlichen Ausrichtung aller Komponenten hin zu der wesentlich einfacher handhabbaren Ansteuerung unterschiedlicher Anregungswellenlängen verlagert werden. Damit ist zum einen eine wesentliche größere Flexibilität bzgl. der Einsatzmöglichkeiten, zum anderen aber auch eine sehr viel robustere Ausgestaltung möglich als beim bisherigen Stand der Technik. Insbesondere führen Vibrationen des Systems nur zu einer entsprechenden räumlichen Versetzung des Projektionsbildes, nicht aber zu einer Farbverschiebung, sodass ein Einsatz etwa in Kraftfahrzeugen möglich wird.

Die in der US 5,684,621 als zur Herstellung von Projektionsvolumina geeignet offenbarten Materialien lassen sich ohne weiteres in Projektionsschirme unterschiedlichster Form integrieren, wobei entweder im wesentlichen flächige Träger selbst mit geeigneten Ionen dotiert oder mit dotiertem Material z.B. durch Lackauftrag oder Bedampfung beschichtet werden können.

Gemäß einer bevorzugten Ausführungsform umfasst die Strahlungsquelle einen Laser mit regelbarer Ausgangswellenlänge. Dadurch wird die Ansteuerung des Systems besonders unkompliziert, da die vorteilhaften Intensitäts- und Fokussiereigenschaften des Lasers genutzt werden können und gleichzeitig nur die Steuerung eines Strahls zu bewerkstelligen ist.

Allerdings ist es gemäß einer anderen Ausführungsform auch möglich, dass die Strahlungsquelle mehrere Laser unterschiedlicher Ausgangswellenlängen umfasst. Hierdurch wird die Ansteuerung zwar wenig komplizierter, der Bildaufbau kann aber schneller erfolgen, was größere, höher aufgelöste und 1 oder flimmerärmere Projektionen ermöglicht.

In der erfinungsgemäßen Ansführungsform sendet die Strahlungsquelle elektromagnetische Strahlung im ultravioletten Wellenlängenbereich aus. Dem liegt die Erkenntnis zugrunde, dass fluoreszierende Materialien in der Regel eine negative Stokes-Verschiebung aufweisen, also zur Emission sichtbaren Lichts eine höherenergetische, d.h. kürzerwellige Anregung benötigen. Dies gilt auch für die in der US 5,684,621 als zur Herstellung von Projektionsvolumina geeignet offenbarten Materialien. Aufgrund der dort erwünschten räumlichen Darstellung, konnte jedoch keine UV-Anregungsstrahlung verwendet werden, da diese Fluoreszenz über den gesamten Absorptionsweg des UV-Strahls und nicht nur in dem gewünschten Bildpunkt erzeugen würde. Im vorliegenden Fall eines im Wesentlichen flächigen Projektionsschirms kann jedoch auch direkt höherenergetische Anregungsstrahlung verwendet werden.

Bei einem anderen Ausführungsbeispiel ist es jedoch ebenso möglich, dass die Strahlungsquelle elektromagnetische Strahlung im infraroten Wellenlängenbereich aussenden kann. Dabei muss die Intensität des Strahls allerdings so hoch sein, dass es in der strahlungssensitiven Schicht des Projektionsschirms zu Zwei-Photonen-Absorption in hinreichendem Ausmaß kommt. Dies kann z.B. durch Verwendung mehrerer sich in der strahlungssensitiven Schicht kreuzender Strahlen oder durch Verwendung eines einzigen, hinreichend intensiven Strahls geschehen.

Bei einer besonders vorteilhaften Ausführungsform sind mehrere Projektionsschirme vorgesehen, die über eine Bildgebungseinheit von einer Strahlungsquelle bestrahlt werden. Dies hat den Vorteil dass mehrere Betrachter an verschiedenen Orten eine optimale Sicht auf die dargestellten Informationen haben oder dass unterschiedliche Informationen einem Betrachter an unterschiedlichen Stellen übersichtlich dargestellt werden können, wobei jeweils nur eine opto-elektronische Einheit erforderlich ist. Damit muss der bei weitem teuerste und aufwendigste Teil des Systems nur einmal vorgesehen sein.

Vorzugsweise ist das Projektionssystem bzw. der Projektionsschirm in oder an einem Kraftfahrzeug angeordnet. Hierdurch ergeben sich flexible Möglichkeiten des Info- und/oder Entertainment im Kraftfahrzeug, was der ständig steigenden Zahl von Überwachungs- und Steuerparametern in modernen Kraftfahrzeugen, insbesondere Autos, und der damit verbundenen Problematik der sinnfälligen und übersichtlichen Darbietung der Information gerecht wird.

Besonders bevorzugt ist eine Ausführungsform, bei der wenigstens ein Projektionsschirm im Bereich des Armaturenbretts eines Kraftfahrzeugs angeordnet ist. Damit kann die gewohnte Anordnung von Anzeigen im Kraftfahrzeug beibehalten werden, wobei jedoch eine feste Installation spezifischer Anzeigegeräte wie z.B. Tachometer, Drehzahlanzeige etc. vermieden wird. Vielmehr wird es möglich durch geeignete Programmierung der Bildgebungseinheit benutzer- und/oder situationsspezifische Anzeigen zu schaffen.

Bei einer weiteren, vorteilhaften Ausführungsform ist vorgesehen, dass wenigstens ein Projektionsschirm im Bereich eines Seitenfensters oder der Windschutzscheibe eines Kraftfahrzeugs angeordnet ist. Dies bietet den Vorteil, dass der Fahrer die Anzeigen ablesen kann ohne seinen Blick gänzlich vom Verkehrsgeschehen zu lösen.

Weiter kann vorgesehen sein, dass wenigstens ein Projektionsschirm im Bereich der Rückseite des Fahrer- und/oder des Beifahrersitzes eines Kraftfahrzeugs angeordnet ist. Dies ermöglicht es Mitfahrem auf den Rücksitzen während der Fahrt Unterhaltung in Form von Video, TV oder Computerspielen zu präsentieren. Selbstverständlich muss hierzu die Ansteuerung der Bildgebungseinheit geeignet ausgelegt sein.

Die Bildgebungseinheit kann auf verschiedene, dem Fachmann bekannte Weisen ausgeführt sein. Geeignet sind hierfür mikroelektromechanische Systeme (MEM = Microelektromechanical System). Hierzu zählen DMD-Microdisplays (DMD = Digital Micromirror Device), biaxial auslenkbare Mikrospiegel und GLV (Grating light Valve). Auch geeignet sind Ausführungen wie ein LCOS-Mikrodisplay (Liquid Crystal On Silicon), ein zwei Galvanometerspiegel umfassendes Scanningsystem, eine Kombination von Galvanometerspiegel und MRS (Mechanical Resonant Scanner) oder zwei MRS.

Solche Elemente sowie die zugehörigen Ansteuerungen in Hard- und Software sind handelsüblich und daher kostengünstig integrierbar. Sie lassen sich zusammen mit Laser- oder anderen Lichtquellen betreiben. Die Bildgebungseinheit ist dabei von einem programmierbaren Computer ansteuerbar.

Bei einer vorteilhaften Ausführungsform kann vorgesehen sein, die Strahlungsquelle und die Bildgebungseinheit vom Betrachter aus gesehen hinter dem Projektionsschirm anzuordnen. Dadurch wird, insbesondere in engen Fahrerkabinen eines Kraftfahrzeugs, vermieden dass der Betrachter den Projektionsschirm gegen die Bildgebungseinheit abschattet. Vielmehr ist ein verdeckter Einbau in das Fahrzeug möglich.

Andererseits ist es ebenso möglich, dass die Strahlungsquelle und die Bildgebungseinheit vom Betrachter aus gesehen vor dem Projektionsschirm angeordnet sind. Dies ermöglicht auch die Projektion auf nicht hinterbaute Schirme, wie z.B. Fensterscheiben eines Kraftfahrzeugs.

Besonders vorteilhaft ist es, wenn der Projektionsschirm mit einer für die verwendete Anregungsstrahlung undurchlässigen oder absorbierenden Beschichtung versehen ist. Diese muss selbstverständlich auf der der Bildgebungseinheit abgewandten Seite des Schirms aufgebracht sein. Damit kann verhindert werden, dass der Betrachter der Anregungsstrahlung - in Transmission oder in Reflexion - ausgesetzt wird, was insbesondere bei intensiver Laserstrahlung ein wichtiger Sicherheitsaspekt ist.

Im erfindungsgemäßen Verfahren zur Bildgebung wird Fluoreszenzlicht unterschiedlicher Farben durch die strahlungssensitive Fläche des Projektionsschirms, die aus einem Material besteht, das ortsunabhängig Fluoreszenzlicht unterschiedlicher Wellenlängen in Abhängigkeit von der Wellenlänge der Anregungsstrahlung abgibt, durch Variation der Wellenlänge der unsichtbaren elektromagnetischen Strahlung ausgesendet.

Dadurch, dass das Fluoreszenzlicht unterschiedlicher Farben bzw. Wellenlängen in Abhängigkeit von der Wellenlänge der Anregungstrahlung ortsunabhängig und durch Variation der Wellenlänge der unsichtbaren elektromagnetischen Strahlung ausgesendet wird, ist eine kostengünstige und robuste Darstellung von Informationen möglich. Vibrationen des Systems führen - wie oben aufgeführt - nicht zu einer Farbverschiebung, so dass sich das Verfahren auch in Kraftfahrzeugen einsetzen lässt.

Weitere Einzelheiten ergeben sich aus der nachstehenden, ausführlichen Beschreibung und den beigefügten Zeichnungen, in denen bevorzugte Ausführungsformen beispielsweise veranschaulicht sind.

In den Zeichnungen zeigen:
- Figur 1:: eine schematische Darstellung der Energieniveaus eines Fluorophors,
- Figur 2:: eine schematische Darstellung einer ersten Ausführungsform eines Projektionssystems,
- Figur 3:: eine schematische Darstellung einer zweiten Ausführungsform eines Projektionssystems,
- Figur 4:: eine schematische Darstellung einer dritten Ausführungsform eines Projektionssystems.

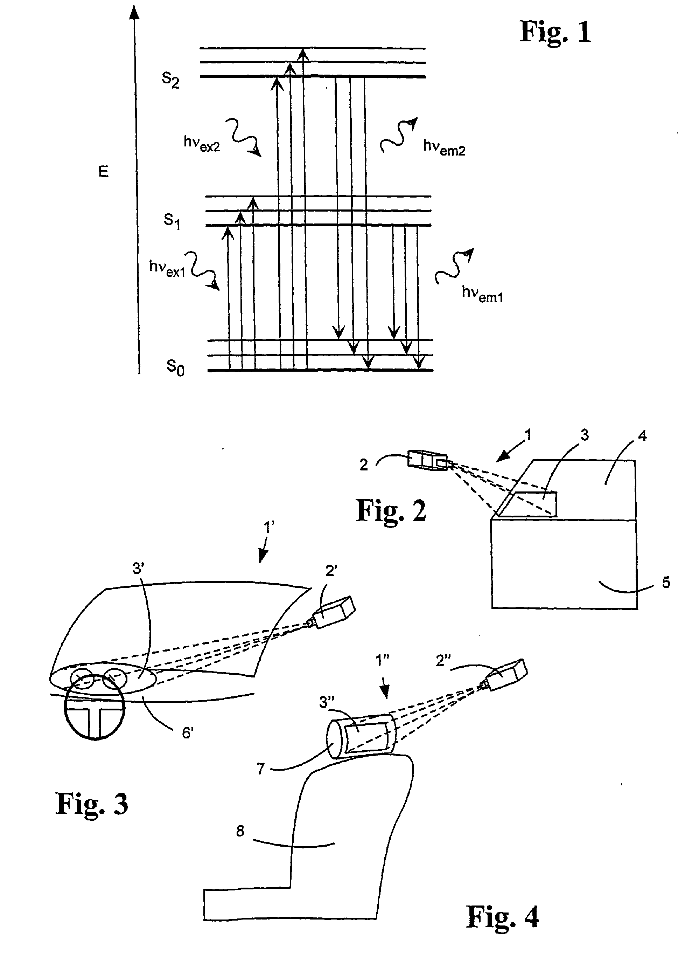

Figur 1 zeigt eine schematische Darstellung der Energieniveaus eines Fluorophors, d.h. eines fluoreszierenden Moleküls, lons, Atoms oder dgl., beispielsweise eines Seltenerden-lons in einem gläsernen oder kristallinen Trägermaterial. Normalerweise befindet sich das lon in seinem Grundzustand S0, der in Fig. 1 als dicke Linie dargestellt ist. Die als dünnere Linien dargestellten phononischen Subniveaus sind in der Regel nicht angeregt. Durch Einstrahlung einer Energie hv, z.B. in Form von elektromagnetischer Strahlung, kann das Ion in einen höheren energetischen Zustand angehoben werden. Dies tritt jedoch nur dann ein, wenn die eingestrahlte Energie der Energielücke zwischen dem Grundzustand S0 und einem höheren Zustand S1 oder S2 entspricht. Diese Exitations- oder Anregungsenergien sind in Fig. 1 mit hvex1 und hvex2 bezeichnet, die Strahlung der Wellenlängen λex1 = c/vex1 und λex2 = c/vex2 entsprechen, wobei c die Lichtgeschwindigkeit, v die Frequenz und h das Planck'sche Wirkungsquantum bezeichnen. Die Energielücke kann auch durch Mehr-Photonen-Absorption, d.h. simultane Absorption mehrerer niederenergetischer Photonen überbrückt werden. Hierbei handelt es sich jedoch um ein physikalisch unterschiedliches Phänomen, das mit sehr viel geringerer Wahrscheinlichkeit auftritt. Da durch die Einstrahlung auch höhere phononische Niveaus, angedeutet durch die dünneren Linien oberhalb der angeregten Zustände, angeregt werden können, sind die Absorptionsbanden nicht völlig scharf, sondern weisen ein mehr oder weniger breites Spektrum auf. Nach der Lebensdauer des angeregten Zustandes, der sich üblicherweise im ns-Bereich bewegt, fällt das Ion von seinem angeregten Zustand in den Grundzustand zurück, wobei ein Photon der Energie hvem1 oder hvem2 emittiert wird. Diese Strahlung ist in der Regel längerwellig als die Anregungsstrahlung, da das angeregte lon vor Aussendung des Fluoreszenzphotons durch interne Konversion in das unterste phononische Niveau des angeregten Zustandes übergeht, andererseits aber auf ein höheres phononisches Niveau des Grundzustandes zurückfallen kann. Man spricht hier von negativer Stokes-Verschiebung. Somit ist es möglich, bei geeignet gewähltem Material durch Anregung im UV-Bereich Fluoreszenzlicht im sichtbaren Spektralbereich zu erzeugen. Wie aus Fig. 1 deutlich hervorgeht, hängt die Wellenlänge, d.h. die Farbe des Fluoreszenzlichtes im wesentlichen davon ab, von welchem angeregten Zustand das Ion in seinen Grundzustand zurückkehrt. Dies ist jedoch, wie oben erläutert in erster Linie abhängig von der Wellenlänge der Anregungsstrahlung. Somit ist es möglich, durch geeignete Regelung der Anregungswellenlängen unterschiedliche Farben von Fluoreszenzlicht zu erzeugen.

In Figur 2 ist ein Projektionssystem 1, bestehend aus einer Projektionseinheit 2 und einem Projektionsschirm 3 dargestellt. Die Projektionseinheit 1 umfasst eine Strahlungsquelle und eine Bildgebungseinheit, die beide in der Zeichnung nicht nähre dargestellt sind. Die Strahlungsquelle kann z.B. einen UV-Laser mit regelbarer Wellenlänge oder eine Batterie von z.B. drei UV-Lasem fester aber unterschiedlicher Wellenlängen sein, die jeweils geeignet sind, rote, grüne oder blaue Fluoreszenz anzuregen. Als Bildgebungseinheiten kommen neben mikroelektromechanischen Systemen (MEM) vor allem computergesteuerte, zwei Galvanometerspiegel umfassende Scanningsysteme, biaxial auslenkbare Mikrospiegel, LCOS-Mikrodisplays oder DMD-Mikrodisplays in Frage. Der Projektionsschirm 3 ist in dem Ausführungsbeispiel von Fig. 2 im Bereich eines Seitenfensters 4 einer Kraftfahrzeugtür 5 realisiert. Dies kann beispielsweise dadurch erfolgen, dass das Glas des Seitenfensters 4 im Bereich des Projektionsschirms 3 mit geeigneten Ionen dotiert ist oder eine entsprechende Beschichtung, z.B. als Lackauftrag oder Aufdampfung trägt.

In Fig. 3 ist eine weitere Ausführungsform des Projektionssystems 1' dargestellt. Der Projektionsschirm 3', der von der Projektionseinheit 2' bestrahlt wird, ist hier im Bereich des Armaturenbretts 6 eines Kraftfahrzeugs angeordnet.

In Fig. 4 schließlich ist eine dritte Ausführungsform des Projektionssystems 1" gezeigt. Der Projektionsschirm 3", der von der Projektionseinheit 2" bestrahlt wird, ist hier im rückwärtigen Bereich der Kopfstütze 7 eines Fahrer- oder Beifahrersitzes 8 eines Kraftfahrzeugs angeordnet.

Viele weitere, vorteilhafte Varianten sind denkbar. So können insbesondere weitere Flächen im Bereich von Innen- oder Außenspiegeln, der Mittelkonsole oder der Windschutzscheibe eines Fahrzeugs als Projektionsschirm genutzt bzw. mit einem Projektionsschirm versehen werden.

Die Erfindung wird im nachfolgenden Anspruch definiert.

## Patentansprüche

1. Verfahren zur bildgebenden Darstellung von Information in einem Kraftfahrzeug mit einer Strahlungsquelle zur Erzeugung elektromagnetischer Strahlung außerhalb des sichtbaren Wellenlängenbereichs, einer von der Strahlungsquelle bestrahlten Bildgebungseinheit und einem Projektionsschirm, mit einer strahlungssensitiven Fläche, die bei Anregung mit besagter unsichtbarer Strahlung Fluoreszenzlicht im sichtbaren Wellenlängenbereich aussendet, **dadurch gekennzeichnet,**
- **dass** die strahlungssensitive Fläche aus einem Material besteht, das ortsunabhängig sichtbares Fluoreszenzlicht abgibt und dass die Wellenlänge des Fluoreszenzlichts von der Wellenlänge der Anregungsstrahlung abhängt,
- **dass** die Strahlungsquelle Anregungsstrahlung im ultravioletten Wellenlängenbereich erzeugt, und
- die Strahlungsquelle durch einen einzigen Laser mit regelbarer Ausgangswellenlänge gebildet wird, der rotes, grünes und blaues Fluoreszenzlicht auf der strahlungssensitiven Fläche anregt.

## Claims

1. A method for the imaging display of information in a motor vehicle comprising a radiation source for generating electromagnetic radiation outside the visible wavelength range, an imaging unit irradiated by the radiation source and a projection screen, with a radiation-sensitive surface, which, when excited with said invisible radiation, emits fluorescent light in the visible wavelength range, **characterised in that**
- the radiation-sensitive surface comprises a material, which emits site-independent visible fluorescent light and **in that** the wavelength of the fluorescent light depends on the wavelength of the excitation radiation,
- the radiation source generates excitation radiation in the ultraviolet wavelength range, and
- the radiation source is formed by a single laser with a controllable output wavelength, which excites red, green and blue fluorescent light on the radiation-sensitive surface.

## Revendications

1. Procédé de représentation d'image d'information dans un véhicule automobile comportant une source de rayonnement générant un rayonnement électromagnétique au-delà de la plage des longueurs d'ondes visibles, une unité génératrice d'image éclairée par la source de rayonnement et un écran de projection avec une surface sensible au rayonnement et qui, excité par le rayonnement invisible, émet de la lumière fluorescente dans la plage des longueurs d'ondes visibles,
**caractérisé en ce que**
- la surface sensible au rayonnement est réalisée en une matière qui émet une lumière fluorescente visible, dépendant du lieu et **en ce que** la longueur d'onde de la lumière fluorescente dépend de la longueur d'onde du rayonnement d'excitation,
- la source de rayonnement génère un rayonnement d'excitation dans la plage des longueurs d'ondes ultraviolettes, et
- la source de rayonnement est formée par un unique laser à longueur d'onde de sortie réglables, excitant une lumière fluorescente rouge, verte et bleue sur la surface sensible au rayonnement.
